# EUROPÄISCHE PATENTANMELDUNG

(11) **EP 2 527 124 A1**
(43) Veröffentlichungstag der Anmeldung: **28.11.2012**
(21) Anmeldenummer: 11167929.6
(22) Anmeldetag: 27.05.2011
(51) Int. Cl.: B29C 44/34, C08J 9/232, C08J 9/236

(54) **Verfahren zur Herstellung eines eine Hohlraumstruktur aufweisenden Formkörpers zur Schall- und/oder Wärmedämmung sowie Formkörper zur Schall- und/oder Wärmedämmung**

(71) Anmelder: STO AG, 79780 Stühlingen (DE)
(72) Erfinder: Hitzler, Martin, 78244 Gottmadingen (DE); Weier, Andreas, 78647 Trossingen (DE); Kohler, Eva, 79777 Obermettingen (DE); Leingruber, Silke, 78176 Blumberg (DE)
(74) Vertreter: Gottschalk, Matthias

(57) **Zusammenfassung**

Die Erfindung betrifft ein Verfahren zur Herstellung eines eine Hohlraumstruktur aufweisenden Formkörpers zur Schall- und/oder Wärmedämmung von Gebäuden. Erfindungsgemäß werden vorgeschäumte Polystyrolpartikel in einer Form oder auf einer Bandanlage unter Einwirkung von Druck und/oder Wärme zu einem Formkörper verdichtet, wobei der Verdichtungsgrad 0,2-0,8, vorzugsweise 0,3 bis 0,7, weiterhin vorzugsweise 0,4 bis 0,6 beträgt, so dass ein zusammenhängendes Hohlraumvolumen im Formkörper erhalten bleibt.

Des Weiteren betrifft die Erfindung einen Formkörper zur Schall- und/oder Wärmedämmung von Gebäuden.

## Beschreibung

Die Erfindung betrifft ein Verfahren zur Herstellung eines eine Hohlraumstruktur aufweisenden Formkörpers zur Schall- und/oder Wärmedämmung von Gebäuden sowie einen Formkörper zur Schall- und/oder Wärmedämmung von Gebäuden.

### Stand der Technik

Formkörper mit einer Hohlraumstruktur zur Schall- und/oder Wärmedämmung von Gebäuden liegen insbesondere als Schall- und/oder Wärmedämmplatten aus den unterschiedlichsten Werkstoffen bzw. Werkstoffkombinationen vor. Die Hohlraumstruktur kann dabei nur in einem Bereich des Formkörperquerschnitts oder durchgehend ausgebildet sein, das heißt, sich durch den ganzen Formkörper erstrecken. Beispielsweise können Hohlräume auch durch nachträglich eingebrachte Vertiefungen oder Ausnehmungen ausgebildet worden sein. Soweit die Hohlräume zusammenhängend ausgebildet sind, können sie Kanäle ausformen, welche beispielsweise den Einsatz des Formkörpers als Drainageplatte möglich machen.

Eine Dämm- und/oder Drainageplatte der vorstehend genannten Art geht beispielhaft aus der Druckschrift DE 10 2004 033 535 A1 hervor. Zur Ausbildung von Drainagekanälen weist die hierin beschriebene Dämm- und/oder Drainageplatte eine verschmolzene Oberfläche auf, in welcher die Drainagekanäle eingeformt sind. Als bevorzugter Werkstoff, aus welchem die Dämm- und/oder Drainageplatte hergestellt ist, wird Polystyrol vorgeschlagen. Weiterhin vorzugsweise wurde die Platte aus einem Polystyrol-Schaumblock thermisch herausgeschnitten.

Der vorliegenden Erfindung liegt die Aufgabe zugrunde, ein einfaches und damit kostengünstiges Verfahren zur Herstellung eines eine Hohlraumstruktur aufweisenden Formkörpers zur Schall- und/oder Wärmedämmung von Gebäuden anzugeben. Des Weiteren soll ein kostengünstig herstellbarer Formkörper zur Schall- und/oder Wärmedämmung von Gebäuden angegeben werden, der zudem eine ausreichende mechanische Festigkeit aufweist.

Die Aufgabe wird gelöst durch ein Verfahren mit den Merkmalen des Anspruchs 1 sowie einen Formkörper mit den Merkmalen des Anspruchs 8. Vorteilhafte Weiterbildungen der Erfindung sind jeweils in den Unteransprüchen angegeben.

### Offenbarung der Erfindung

Bei dem vorgeschlagenen Verfahren zur Herstellung eines eine Hohlraumstruktur aufweisenden Formkörpers zur Schall- und/oder Wärmedämmung von Gebäuden werden erfindungsgemäß vorgeschäumte Polystyrolpartikel in einer Form oder auf einer Bandanlage unter Einwirkung von Druck und/oder Wärme zu einem Formkörper verdichtet, wobei der Verdichtungsgrad 0,2-0,8, vorzugsweise 0,3 bis 0,7, weiterhin vorzugsweise 0,4 bis 0,6 beträgt, so dass ein zusammenhängendes Hohlraumvolumen im Formkörper erhalten bleibt.

Unter Verdichtungsgrad wird vorliegend das Verhältnis der Höhe des fertigen Formkörpers zur Schütthöhe des Ausgangsmaterials verstanden. Da der Verdichtungsgrad < 1 gewählt ist, weist der fertige Formkörper eine geringere Höhe als das in die Form eingebrachte oder auf das Band aufgebrachte Ausgangsmaterial auf. Der Verdichtungsgrad ist insbesondere derart gewählt, dass ein Zusammenhang der im Formkörper ausgebildeten Hohlräume erhalten bleibt. Der Zusammenhang der Hohlräume gewährleistet, dass der Formkörper in der Lage ist, Wasserdampf und Wasser aufzunehmen und wieder abzugeben. Der Formkörper setzt der Wasserdampf- und Wasseraufnahme demnach keinen Widerstand entgegen. Eine aktive Wasseraufnahme, beispielsweise aufgrund der Ausbildung von Kapillaren, soll vorliegend jedoch vermieden werden.

Das Hohlraumvolumen wird dabei im Wesentlichen durch das zwischen den einzelnen Polystyrolpartikeln verbleibende Zwickelvolumen ausgebildet. Die das Zwickelvolumen begrenzenden Polystyrolpartikel sind nur insoweit verdichtet und/oder thermisch miteinander verschmolzen, dass ein zusammenhängendes Zwickelvolumen erhalten bleibt. Das heißt, dass die Kontaktflächen der einzelnen Polystyrolpartikel untereinander auf ein Minimum reduziert sind, wobei das Minimum mehr als nur ein punktueller Kontakt ist, um eine ausreichende mechanische Festigkeit des Formkörpers zu erzielen. Ein über eine punktuelle Verbindung hinausgehender flächiger Kontakt wird insbesondere durch die Verdichtung bei der Herstellung der Formkörper bewirkt. Des Weiteren trägt eine zumindest partielle thermische Verschmelzung der Polystyrolpartikel zu hinreichend großen Kontaktflächen und damit zu einem stabilen Verbund bei.

Aufgrund der Verwendung bereits vorgeschäumter Polystyrolpartikel, findet keine oder nur eine geringfügige Volumenvergrößerung der Polystyrolpartikel beim Verdichten und/oder Verschmelzen statt. Auch durch diese Maßnahme ist gewährleistet, dass ein zusammenhängendes Hohlraumvolumen im Formkörper erhalten bleibt.

Der Einsatz des erfindungsgemäßen Verfahrens macht eine nachträgliche Bearbeitung des Formkörpers zur Ausbildung einer Hohlraumstruktur entbehrlich. Dadurch sinken der Herstellungsaufwand und die damit verbundenen Herstellungskosten. Zugleich weist ein solcher Formkörper eine ausreichende mechanische Stabilität zur Verwendung als Schalldämm- und/oder Wärmedämmelement auf.

Vorteilhafterweise wird zumindest ein Teil der vorgeschäumten Polystyrolpartikel vor dem Verdichten in einer Form oder auf einer Bandanlage mit einem organischen oder anorganischen Bindemittel beschichtet, wobei das Verdichten vor dem vollständigen Aushärten des Bindemittels erfolgt. Der Verbund der einzelnen Polystyrolpartikel wird in diesem Fall vorrangig durch das außen auf die Partikel aufgebrachte Bindemittel bewirkt, in das die Polystyrolpartikel nach dem vollständigen Aushärten des Bindemittels fest eingeschlossen sind. Dadurch weist der Formkörper eine verbesserte mechanische Festigkeit, insbesondere Querzug- und Biegefestigkeit, auf. Über die Art und die Menge des Bindemittels ist die mechanische Festigkeit des Formkörpers einstellbar.

Zwar kommt durch die zumindest teilweise Beschichtung der Polystyrolpartikel mit einem Bindemittel ein weiterer Verfahrensschritt hinzu, da die Beschichtung jedoch in einfacher Weise durch Besprühen der Partikel mit dem Bindemittel oder durch einfaches Mischen beider Komponenten bewirkbar ist, steigen der Herstellungsaufwand und die damit verbundenen Herstellungskosten nur unwesentlich. Der Einsatz von Bindemitteln macht ferner den Einsatz universeller Herstellverfahren möglich. Beispielsweise können batchweise betriebene Heißpressen oder auch kontinuierliche Bandanlagen mit Dampf- oder Heißluftzufuhr eingesetzt werden. Da die eingesetzten Polystyrolpartikel bereits vorgeschäumt sind, werden spezielle Blockschäumanlagen zur Herstellung der Formkörper nicht benötigt. Da ein Verschäumen der Polystyrolpartikel nicht erforderlich ist, kann zudem "totes" Recyclingmaterial, d. h. kein Treibgas mehr enthaltenes Polystyrol, eingesetzt werden. Dadurch können die Kosten weiter gesenkt werden.

Gemäß einer bevorzugten Ausführungsform der Erfindung werden Dispersionsbindemittel, wie beispielsweise Reinacrylate, Styrolacrylate oder dergleichen, vorzugsweise ohne oder mit nur geringem Lösungsmittelanteil, oder wasserbasierte Reaktivbindemittel, wie beispielsweise Epoxidharze, Polyurethane oder dergleichen, als Bindemittel verwendet. Bei Verwendung derartiger Bindemittel ist zum Einen ist eine gleichmäßige Beschichtung der Polystyrolpartikel und zum Anderen ein guter Verbund der Polystyrolpartikel nach dem vollständigen Aushärten des Bindemittels gewährleistet. Darüber hinaus können auch Bindemittelmischungen umfassend wenigstens zwei verschiedene Bindemittel Verwendung finden.

Vorteilhafterweise werden vor dem Beschichten der vorgeschäumten Polystyrolpartikel mit einem Bindemittel diesem Pigmente und/oder Füllstoffe zugegeben. Indem die Polystyrolpartikel mit dem Pigmente und/oder Füllstoffe enthaltenen Bindemittel beschichtet werden, lagern diese sich außen an den Partikeln an, so dass- insbesondere im Falle der Zugabe von Pigmenten -die Farbgebung der Polystyrolpartikel beeinflusst werden kann. Bereits dunkel eingefärbte Polystyrolpartikel, welche Ruß oder Graphit enthalten und hervorragende Wärmedämmeigenschaften besitzen, können auf diese Weise aufgehellt werden. Die außen hell und innen dunkel gefärbten Partikel weisen im Verbund als Formkörper nicht nur hervorragende Wärmedämmeigenschaften auf, sondern ferner eine hohe Formstabilität bei Sonneneinstrahlung. Ein beispielsweise zur Wärmedämmung eines Gebäudes an einer Fassade angebrachter Formkörper neigt demzufolge -selbst bei längerer Sonneneinstrahlung - weniger zu Verformungen. Insbesondere kann ein Schüsseln eines vorzgusweise plattenförmigen Formkörpers verhindert werden. Denn durch die äußere Aufhellung der Polystyrolpartikel wird weniger Wärmestrahlung absorbiert, welche vorrangig derartige Verformungen verursacht.

Die Pigmente und/oder Füllstoffe können ferner einer dunklen Farbgebung der Polystyrolpartikel dienen, um beispielsweise nur die Wärmedämmeigenschaften zu verbessern.

Als Pigmente und/oder Füllstoffe eignen sich insbesondere athermane Materialien, wie beispielsweise Ruß, Grapit oder Metallpulver. Darüber hinaus sind Titandioxid (TiO₂), Calciumoxid (CaO), Zinkoxid (ZiO), Calciumcarbonat (CaCO₃), Siliciumdioxid (SiO₂), Bariumsulfat (BaSO₄), Aluminiumhydroxid (Al(OH)3) oder Magnesiumhydroxid (Mg(OH)₂) als Pigmente bzw. Füllstoffe geeignet.

Alternativ oder ergänzend wird vorgeschlagen, dass dem Bindemittel vor dem Beschichten der vorgeschäumten Polystyrolpartikel Additive, wie beispielsweise Verdicker, Netzmittel, Stabilisatoren, Entschäumer, Flammschutzmittel oder Rheologieadditive, zugegeben werden. Dadurch können weitere Eigenschaften des Bindemittels eingestellt werden, so dass beispielsweise eine gleichmäßige Benetzung der Polystyrolpartikel sowie eine gute Haftung des Bindemittels auf den Partikeln gewährleistet ist. Zugleich kann Einfluss auf die Eigenschaften des Formkörpers genommen werden, der durch Zugabe entsprechender Additive beispielsweise verbesserte Brandschutzeigenschaften aufweist.

Gemäß einem weiteren bevorzugten Ausführungsbeispiel der Erfindung werden sowohl mit einem organischen oder anorganischen Bindemittel beschichtete vorgeschäumte Polystyrolpartikel als auch unbeschichtete vorgeschäumte Polystyrolpartikel verwendet. Dabei können die beschichteten und unbeschichteten Polystyrolpartikel in regelmäßiger oder unregelmäßiger Anordnung in einer Form oder auf einer Bandanlage unter Einwirkung von Druck und/oder Wärme zu einem Formkörper verdichtet werden. Zur Erzielung einer regelmäßigen Anordnung können die beschichteten und unbeschichteten Polystyrolpartikel beispielsweise schichtweise in eine Form oder auf ein Band einer Bandanlage aufgebracht werden, so dass der fertige Formkörper einen geschichteten Aufbau besitzt. Während der Verbund der beschichteten Polystyrolpartikel im Wesentlichen über das ausgehärtete Bindemittel bewirkt wird, wird der Verbund der unbeschichteten Polystyrolpartikel im Wesentlichen durch eine thermische Verschmelzung der Partikel bewirkt. Während die hierzu erforderliche Wärme vorzugsweise durch Wasserdampf oder Heißluft eingebracht wird, wird der zur Verdichtung erforderliche Druck vorzugsweise durch den Einsatz von Pressformen bewirkt, in welche die mit einem Bindemittel beschichteten und unbeschichteten Polystyrolpartikel als homogene Mischung oder schichtweise eingebracht werden.

Bevorzugt werden vorgeschäumte Polystyrolpartikel mit einer mittleren Korngröße von 2 bis 10 mm, vorzugsweise 3 bis 8 mm, weiterhin vorzugsweise 4 bis 6 mm verwendet. Die Schüttdichte der vorgeschäumten Partikel beträgt weiterhin bevorzugt etwa 0,015 g/cm³.

Des Weiteren wird vorgeschlagen, dass bereits mit einem athermanen Material dotierte vorgeschäumte Polystyrolpartikel verwendet werden. D. h., dass bereits eingefärbte Polystyrolpartikel verwendet werden, die zudem von außen mit einem Bindemittel beschichtet werden. Darüber hinaus können zur Herstellung eines beschichtete und unbeschichtete Polystyrolpartikel umfassenden Formkörpers auch mit einem athermanen Material dotierte vorgeschäumte Polystyrolpartikel verwendet werden, die nicht zusätzlich mit einem Bindemittel beschichtet werden.

Der zur Lösung der eingangs gestellten Aufgabe ferner vorgeschlagene Formkörper zur Schall- und/oder Wärmedämmung von Gebäuden ist erfindungsgemäß aus vorgeschäumten Polystyrolpartikeln gebildet, die in einer Form oder auf einer Bandanlage unter Einwirkung von Druck und/oder Wärme verdichtet worden sind. Die Verdichtung erfolgt in der Weise, dass ein zusammenhängendes Hohlraumvolumen erhalten bleibt. Das zusammenhängende Hohlraumvolumen besitzt einen Volumenanteil, der erfindungsgemäß 5 bis 30 Vol.-%, vorzugsweise 10 bis 25 Vol.-%, weiterhin vorzugsweise 15 bis 20 Vol.-% bezogen auf das Gesamtvolumen des Formkörpers beträgt.

Aufgrund der Hohlraumstruktur weist der Formkörper gute Schall- und/oder Wärmedämmeigenschaften auf. Der Formkörper ist demnach insbesondere zur Ausbildung oder Herstellung einer Schalldämm- bzw. Wärmedämmplatte geeignet. Beispielsweise kann eine solche Platte aus dem Formkörper herausgeschnitten werden, wodurch gewährleistet ist, dass sich die Hohlraumstruktur in Form von Vertiefungen und/oder Ausnehmungen auf der Schnittfläche fortsetzt. Mit der Schnittfläche nach außen wird die Platte vorzugsweise an einer Gebäudewand angebracht, so dass die Vertiefungen und/oder Ausnehmungen dem jeweiligen Innen- bzw. Außenraum zugewandt sind. In der Funktion als Schalldämmplatte bewirken die Vertiefungen und/oder Ausnehmungen, dass sich die Schallwellen in den Vertiefungen und/oder Ausnehmungen verfangen. Der Schall wird demnach absorbiert. In der Funktion als Wärmedämmplatte bewirkt das zusammenhängende Hohlraumvolumen eine gute Dampf- und Wasserdurchlässigkeit. Die Platte eignet sich somit insbesondere als Drainageplatte, welche zudem gute Wärmedämmeigenschaften aufweist.

Zur Erhöhung der mechanischen Stabilität des Formkörpers wird weiterhin vorgeschlagen, dass zumindest ein Teil der vorgeschäumten Polystyrolpartikel in einem ausgehärteten organischen oder anorganischen Bindemittel fest eingebunden ist, mit welchem zumindest ein Teil der Polystyrolpartikel - vor deren Verdichtung in einer Form oder auf einer Bandanlage - beschichtet worden ist. Bei dem Bindemittel handelt es sich vorzugsweise um ein zuvor in Zusammenhang mit dem erfindungsgemäßen Verfahren beschriebenes Bindemittel. Analog zu den vorherigen Ausführungen können im ausgehärteten Bindemittel Pigmente und/oder Füllstoffe und/oder Additive enthalten sein.

Vorzugsweise beträgt der Bindemittelanteil 2,5 bis 30 Gew.-%, weiterhin vorzugsweise 5 bis 15 Gew.-% bezogen auf das Gesamtgewicht des Formkörpers. Dadurch ist ein stabiler Verbund und demzufolge eine hohe mechanische Festigkeit, insbesondere Querzug- und/oder Biegezugfestigkeit, des Formkörpers gewährleistet.

Des Weiteren kann der Formkörper aus bindemittelbeschichteten und unbeschichteten Polystyrolpartikeln gebildet sein, die in unregelmäßiger oder regelmäßiger Anordnung in einer Form oder auf einer Bandanlage verdichtet worden sind. Der Formkörper kann somit insbesondere eine Schichtstruktur aufweisen.

Aufgrund seiner hervorragenden Schall- und/oder Wärmedämmeigenschaften wird ferner die Verwendung eines erfindungsgemäßen Formkörpers als Schall- oder Wärmedämmplatte vorgeschlagen. Aufgrund des zusammenhängenden Hohlraumvolumens ist der Formkörper zudem durchlässig für Wasserdampf und Wasser, so dass ferner die Verwendung des Formkörpers als Drainageplatte vorgeschlagen wird. Der Formkörper kann hierzu direkt als Platte oder als Block hergestellt worden sein, welcher nachträglich in einzelne Platten zerschnitten wird.

Die Erfindung wird nachfolgend anhand verschiedener Ausführungsbeispiele näher erläutert.

### Beispiel 1

Vorgeschäumte grau eingefärbte Polystyrolpartikel mit einer Korngröße von 4-8 mm und einer Schüttdichte von 0,0157 g/cm³ werden in eine Form eingebracht und unter Druck verdichtet. Bei verschlossener Form werden die Polystyrolpartikel zudem drei Stunden lang einer Temperatur von 90° ausgesetzt, indem Heißluft in die Form eingeblasen wurde. Man erhält einen plattenförmigen Formkörper, dessen Rohdichte (DIN EN 1602) 23 kg/m³ und dessen Wärmeleitfähigkeit (DIN EN 12667) 0,0298 W/mK betragen. Ferner betragen die Querzugfestigkeit (DIN EN 1607) 79 kPa und die Biegezugfestigkeit (3-Punkt Biegezugfestigkeit DIN EN 12089) 115 kPa. Der Formkörper weist zudem einen Weißgrad von 16% und einen Hellbezugswert Y von 14% auf.

Zur Bemessung des Hohlraumanteils wurde ein entsprechender Probenkörper der Abmessungen 12 cm x 12 cm x 3 cm hergestellt. Die Seitenkanten wurden mit Klebeband abgedichtet und der Probenkörper danach mit Wasser begossen, bis alle Hohlräume mit Wasser gefüllt waren. Die Menge des aufgenommenen Wassers wurde ausgewogen. Danach hat der Probenkörper 80 g Wasser aufgenommen, woraus ein Hohlraumanteil von 18,6% resultiert.

### Beispiel 2

Vorgeschäumte grau eingefärbte Polystyrolpartikel mit einer Korngröße von 4-8 mm und einer Schüttdichte von 0,0157 g/cm³ werden mit weißer Farbe (StoPrefa Color SMA) versetzt und homogen vermischt, so dass die Partikel außen gleichmäßig mit weißer Farbe benetz sind. Danach wird die Mischung - vor dem vollständigen Trocknen und Aushärten der Farbe - in eine Form eingebracht und unter Druck verdichtet. Bei verschlossener Form wird die Mischung zudem zwei Stunden lang einer Temperatur von 90° ausgesetzt, indem Heißluft in die Form eingeblasen wird. Man erhält einen plattenförmigen Formkörper, dessen Rohdichte (DIN EN 1602) 36 kg/m³ und dessen Wärmeleitfähigkeit (DIN EN 12667) 0,0315 W/mK betragen. Ferner beträgt die Querzugfestigkeit (DIN EN 1607) 183 kPa. Der Formkörper weist zudem einen Weißgrad von 54% und einen Hellbezugswert Y von 37% auf. Den Werten ist zu entnehmen, dass durch Zugabe eines Bindemittels die mechanische Festigkeit des Formkörpers deutlich erhöht werden kann.

Zur Bemessung des Hohlraumanteils wurde ein entsprechender Probenkörper der Abmessungen 12 cm x 12 cm x 3 cm hergestellt. Die Seitenkanten wurden mit Klebeband abgedichtet und der Probenkörper danach mit Wasser begossen, bis alle Hohlräume mit Wasser gefüllt waren. Die Menge des aufgenommenen Wassers wurde ausgewogen. Danach hat der Probenkörper 50 g Wasser aufgenommen, woraus ein Hohlraumanteil von 11,6% resultiert. Durch das zugegebene Bindemittel wird demnach auch der Hohlraumanteil verringert.

### Beispiel 3

Vorgeschäumte blau eingefärbte Polystyrolpartikel mit einer Korngröße von 3-4 mm und einer Schüttdichte von 0,0099 g/cm³ werden in eine Form eingebracht und unter Druck verdichtet. Bei verschlossener Form wird die Mischung zudem drei Stunden lang einer Temperatur von 90° ausgesetzt, indem Heißluft in die Form eingeblasen wird. Man erhält einen plattenförmigen Formkörper, dessen Rohdichte (DIN EN 1602) 14,0 kg/m³ beträgt.

Zur Bemessung des Hohlraumanteils wurde ein entsprechender Probenkörper der Abmessungen 12 cm x 12 cm x 3 cm hergestellt. Die Seitenkanten wurden mit Klebeband abgedichtet und der Probenkörper danach mit Wasser begossen, bis alle Hohlräume mit Wasser gefüllt waren. Die Menge des aufgenommenen Wassers wurde ausgewogen. Danach hat der Probenkörper 113 g Wasser aufgenommen, woraus ein Hohlraumanteil von 26,2% resultiert. Der Hohlraumanteil kann demnach nicht nur über den Druck bzw. den Grad der Verdichtung und/oder den Bindemittelanteil, sondern auch über die Korngröße der vorgeschäumten Polystyrolpartikel eingestellt werden.

## Patentansprüche

1. Verfahren zur Herstellung eines eine Hohlraumstruktur aufweisenden Formkörpers zur Schall- und/oder Wärmedämmung von Gebäuden, **dadurch gekennzeichnet, dass** vorgeschäumte Polystyrolpartikel in einer Form oder auf einer Bandanlage unter Einwirkung von Druck und/oder Wärme zu einem Formkörper verdichtet werden, wobei der Verdichtungsgrad 0,2-0,8, vorzugsweise 0,3 bis 0,7, weiterhin vorzugsweise 0,4 bis 0,6 beträgt, so dass ein zusammenhängendes Hohlraumvolumen im Formkörper erhalten bleibt.

2. Verfahren nach Anspruch 1,
**dadurch gekennzeichnet, dass** zumindest ein Teil der vorgeschäumten Polystyrolpartikel vor dem Verdichten in einer Form oder auf einer Bandanlage mit einem organischen oder anorganischen Bindemittel beschichtet wird und das Verdichten vor dem vollständigen Aushärten des Bindemittels erfolgt.

3. Verfahren nach Anspruch 1 oder 2,
**dadurch gekennzeichnet, dass** Dispersionsbindemittel, wie beispielsweise Reinacrylate, Styrolacrylate oder dergleichen, vorzugsweise ohne oder mit nur geringem Lösungsmittelanteil, oder wasserbasierte Reaktivbindemittel, wie beispielsweise Epoxidharze, Polyurethane oder dergleichen, als Bindemittel verwendet werden.

4. Verfahren nach einem der vorhergehenden Ansprüche,
**dadurch gekennzeichnet, dass** vor dem Beschichten der vorgeschäumten Polystyrolpartikel mit einem Bindemittel diesem Pigmente und/oder Füllstoffe zugegeben werden.

5. Verfahren nach einem der vorhergehenden Ansprüche,
**dadurch gekennzeichnet, dass** vor dem Beschichten der vorgeschäumten Polystyrolpartikel mit einem Bindemittel diesem Additive, wie beispielsweise Verdicker, Netzmittel, Stabilisatoren, Entschäumer, Flammschutzmittel oder Rheologieadditive, zugegeben werden.

6. Verfahren nach einem der vorhergehenden Ansprüche,
**dadurch gekennzeichnet, dass** mit einem organischen oder anorganischen Bindemittel beschichtete und unbeschichtete vorgeschäumte Polystyrolpartikel verwendet werden, wobei die beschichteten und unbeschichteten Polystyrolpartikel in regelmäßiger oder unregelmäßiger Anordnung in einer Form oder auf einer Bandanlage unter Einwirkung von Druck und/oder Wärme zu einem Formkörper verdichtet werden.

7. Verfahren nach einem der vorhergehenden Ansprüche,
**dadurch gekennzeichnet, dass** vorgeschäumte Polystyrolpartikel mit einer mittleren Korngröße von 2 bis 10 mm vorzugsweise 3 bis 8 mm, weiterhin vorzugsweise 4 bis 6 mm verwendet werden und/oder, dass mit einem athermanen Material dotierte vorgeschäumte Polystyrolpartikel verwendet werden.

8. Formkörper zur Schall- und/oder Wärmedämmung von Gebäuden, wobei der Formkörper eine Hohlraumstruktur aufweist,
**dadurch gekennzeichnet, dass** der Formkörper aus vorgeschäumten Polystyrolpartikeln gebildet ist, die in einer Form oder auf einer Bandanlage unter Einwirkung von Druck und/oder Wärme verdichtet worden sind, so dass ein zusammenhängendes Hohlraumvolumen erhalten bleibt, wobei das zusammenhängende Hohlraumvolumen einen Volumenanteil besitzt, der 5 bis 30 Vol.-%, vorzugsweise 10 bis 25 Vol.-%, weiterhin vorzugsweise 15 bis 20 Vol.-% bezogen auf das Gesamtvolumen des Formkörpers beträgt.

9. Formkörper nach Anspruch 8,
**dadurch gekennzeichnet, dass** zumindest ein Teil der vorgeschäumten Polystyrolpartikel in einem ausgehärteten organischen oder anorganischen Bindemittel fest eingebunden ist, mit welchem zumindest ein Teil der Polystyrolpartikel - vor deren Verdichtung in einer Form oder auf einer Bandanlage - beschichtet worden ist.

10. Formkörpers nach Anspruch 8 oder 9,
**dadurch gekennzeichnet, dass** der Bindemittelanteil 2,5 bis 30 Gew.-%, vorzugsweise 5 bis 15 Gew.-% bezogen auf das Gesamtgewicht des Formkörpers beträgt.
